# EUROPÄISCHE PATENTANMELDUNG

(11) **EP 1 239 273 A1**
(43) Veröffentlichungstag der Anmeldung: **11.09.2002**
(21) Anmeldenummer: 02002244.8
(22) Anmeldetag: 30.01.2002
(51) Int. Cl.: G01K 7/16

(54) **Sensor, insbesondere Temperatur-Sensor**

(30) Priorität: 08.03.2001 DE 10111336
(71) Anmelder: Heraeus Electro-Nite International N.V., 3530 Houthalen (BE)
(72) Erfinder: Damaschke, Gerhard, 65439 Flörsheim (DE); Muziol, Matthias, 63500 Seligenstadt (DE); Hoschkara, Michael, 68623 Lampertheim (DE)
(74) Vertreter: Kühn, Hans-Christian

(57) **Zusammenfassung**

Ein Sensor; insbesondere Temperatur-Sensor, mit einem Messwiderstand (7) auf einem Substrat mit elektrisch isolierender Oberfläche und darauf befindlicher Wderstandsschicht ist von einem Gehäuse (6) umgeben, das Stromdurchführungen zu einem Steckersystem (1) für Anschlussleiter bzw. Kontaktstifte (10) in einem der Messung abgekehrten Bereich aufweist. Der Messwiderstand (7) ist im Bereich eines der Messung zugewandten Endes (14) des Gehäuses angeordnet, wobei zwischen dem Messwiderstand (7) und den Kontaktstiften (10) wenigstens ein Distanzelement (9) aus elektrisch isolierendem Werkstoff mit seitlichen Ausnehmungen zur Führung von elektrischen Leitern (12), die mit dem Messwiderstand (7) verbunden sind, vorgesehen ist.

Der Temperatur-Sensor lässt sich durch variable Gestaltung von Steckersystem und Distanzelement auf einfache Weise an verschiedenartige kundenspezifische Anforderungen anpassen.

## Beschreibung

Die Erfindung betrifft einen Sensor, insbesondere Temperatur-Sensor, mit wenigstens einem Sensor-Element und einem das Sensor-Element umgebenden Gehäuse, das in einem dem Sensor-Element abgekehrten Bereich mit elektrischen Anschluss-Leitern des Sensor-Elements verbundene Stromdurchführungen zu äußeren Anschluss-Leitern aufweist, wobei das Sensor-Element in einem der Messung zugekehrten Bereich des Gehäuses angeordnet ist, und zwischen dem Sensor-Element und den Stromdurchführungen wenigstens ein Distanzelement aus elektrisch isolierendem Werkstoff mit Ausnehmungen zur Führung der Anschluss-Leiter zwischen dem Sensor-Element den Stromdurchführungen vorgesehen ist, sowie dessen Verwendung

Aus der DE 38 27 937 A1 ist ein elektrischer Messwertaufnehmer bekannt, der aus einer Messschaltung mit einem Sensorelement, die von einem Gehäuse umgeben ist, besteht. Das Gehäuse ist mit einem kappenartigen Anschlussteil versehen, welches ein Ende eines Anschlusskabels aufnimmt. Dabei ist innerhalb des Gehäuses die Messschaltung mit dem Anschlusskabel über ein mehradriges flexibles Leitungsstück verbunden. Dabei befinden sich Leitungsstück und Sensorelement auf einem Tragkörper, wobei das Leitungsstück und die aus dem Anschlussteil herausragenden Adern des Anschlusskabels direkt miteinander verbunden sind.

Als problematisch erweist sich der verhältnismäßig komplexe Aufbau, sowie die feste Verbindung zwischen dem Anschlusskabel und dem Messwertaufnehmer, so dass ein flexibler Einsatz bzw. eine kundenspezifische Anpassung des Sensors nur schwer möglich ist.

Aus der EP 0 772 959 B1 ist ein wasserdichtes Gehäuse mit einer Steckverbindung zum Schutz von Elektronikschaltkreisen bekannt, wobei das Gehäuse ein Oberteil und ein Unterteil aufweist und zwischen beiden Teilen eine gespritzte Dichtung aus weichem Kunststoff vorgesehen ist, die zwischen dem aus hartem Kunststoff hergestellten Ober- und Unterteil eingesetzt wird. Das Gehäuse weist ein Steckerteil auf, dessen aus hartem Kunststoff hergestelltes Innenteil Kontaktstifte enthält und einstückig mit dem Oberteil und dem Unterteil ausgebildet ist, wobei das Steckerteil einen sein Innenteil umfassenden Dichtkragen aus weichem Kunststoff aufweist.

Als problematisch erweist sich der verhältnismäßig komplexe Aufbau sowie die relativ starke Abkapselung von Elektronikbauteilen, so dass beispielsweise eine elektronische Temperatur-überwachung mittels eines eingebauten Sensorelements nur unter Schwierigkeiten möglich ist. Weiterhin ist aufgrund der komplexen Struktur eine kundenspezifische Anpassung der Bauform nicht ohne weiteres möglich.

Aufgabe der Erfindung ist es, einen Sensor mit einem Sensorgehäuse zu schaffen, welches auf einfache Art und Weise an kundenspezifische Anforderungen anzupassen ist; darüber hinaus soll durch Gestaltung des Innenaufbaus eine einfache und sichere Kontaktierung eines Sensorelements, insbesondere eines Messwiderstandes, ermöglicht werden, die auch in einer automatisierten Fertigung einsetzbar ist.

Die Aufgabe wird dadurch gelöst, dass die Anschluss-Leiter aus dem der Messung abgekehrten Ende des Distanzelements mit ihren freien Enden herausragen, wobei sie sich bis zu als Stromdurchführungen vorgesehenen Kontaktstiften erstrecken und mit diesen elektrisch und mechanisch fest verbunden sind.

Als vorteilhaft erweist es sich bei dem erfindungsgemäßen Sensor, dass es möglich ist, den Messwiderstand in der Länge zu positionieren und die Anschlussleitungen exakt mit Kontaktstiften eines - ggf. kundenspezifischen - Steckersystems zu verbinden. Aufgrund eines solchen Innenaufbaus ist es möglich, eine in den Sensor selbst integrierte Montagehilfe bzw. Vorrichtung, die eine kostengünstige Herstellung des Sensors bei einem hohem Automatisierungsgrad ermöglicht, einzusetzen.

Ein weiterer Vorteil ist darin zu sehen, dass durch variable Einsätze in einer Spritzgussform Querschnitt und Länge des Distanzelements an den jeweiligen Messwiderstand angepasst werden können.

Vorteilhafte Ausgestaltungen der Erfindung sind in den Ansprüchen 2 bis 9 angegeben.

In einer bevorzugten Ausführungsform des Sensors sind die Kontaktstifte hermetisch dicht durch das Gehäuse nach außen geführt.

Der Sensor ist vorteilhafterweise so ausgebildet, dass das Distanzelement von der Stromdurchführung der Anschlussleiter aus gesehen sich in Richtung Sensor-Element querschnittsmäßig verjüngt und die Ausnehmungen in sich gegenüber liegenden seitlichen Flächen des Distanzelements angeordnet sind, wobei sie die vom Sensor-Element ausgehenden elektrischen Anschluss-Leiter aufnehmen.

Das Distanzelement ist vorteilhafterweise als am Stecker angespritzter Kunststoffsteg mit zwei Führungsnuten ausgebildet.

In einer bevorzugten Ausführungsform ist das Distanzelement wenigstens zum Teil prismatisch ausgebildet, wobei die Ausnehmungen als Nuten in Seitenflächen ausgebildet sind, deren Ebenen sich außerhalb von Gehäuse schneiden. Das Sensorgehäuse weist ein geschlossenes Ende auf, das zur Aufnahme des Messwiderstandes vorgesehen ist. Vorzugsweise ist das Gehäuse wenigstens teilweise rotationssymmetrisch ausgebildet; dabei weist das Gehäuse ein der Messung zugewandtes Teil aus Metall und ein der Messung abgewandtes Teil mit einem Steckersystem auf, das im Wesentlichen aus elektrisch isolierendem Werkstoff besteht. Das Steckersystem ist mit dem Distanzelement mechanisch fest verbunden Als elektrisch isolierender Werkstoff des Gehäuses wird Kunststoff eingesetzt.

In einer bevorzugten Ausführungsform des Sensor-Elements ist dieses als temperaturabhängiger Messwiderstand aus einem Substrat mit elektrisch isolierender Oberfläche und darauf befindlicher Widerstandsschicht ausgebildet.

Als vorteilhaft erweist es sich, dass die Fertigung des Sensors mit einem standardisierten Werkzeug vorgenommen werden kann, wobei der Automatisierungsgrad aufgrund des Distanzelementes sehr hoch liegt.

Die Aufgabe wird verwendungsgemäß dadurch gelöst, dass der Sensor als Temperatur-Sensor eingesetzt wird.

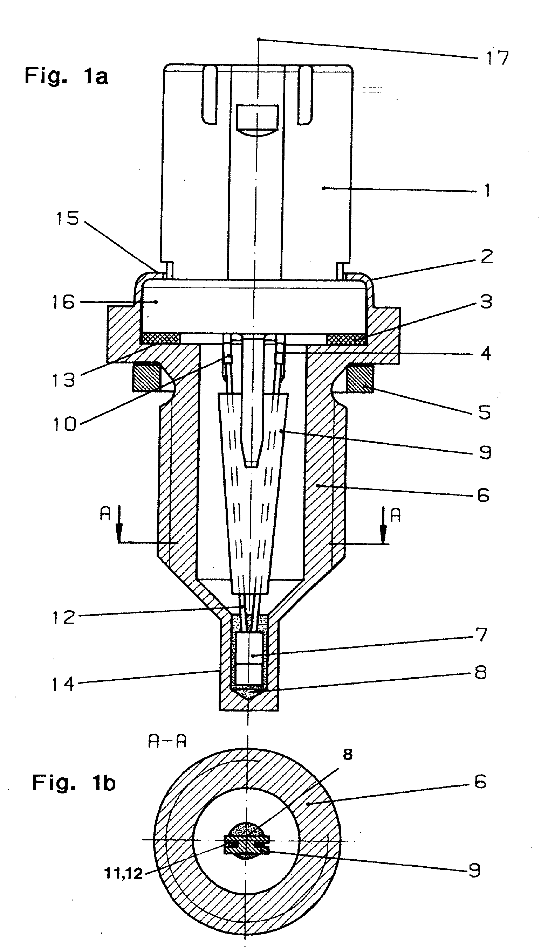

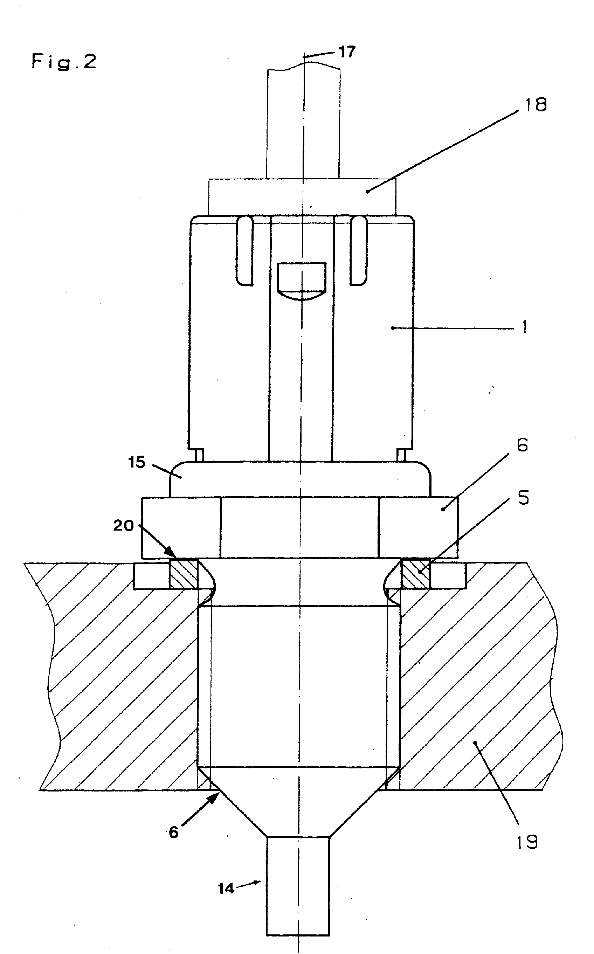

Im folgenden ist der Gegenstand der Erfindung anhand der Figuren 1a, 1b und 2 näher erläutert.

Figur 1a zeigt einen erfindungsgemäßen Sensor im Längsschnitt;

Figur 1b zeigt einen Querschnitt durch den Sensor entlang der Linie AA in Figur 1a.

Figur 2 zeigt im Längsschnitt den Sensor nach Figur 1a, 1b, dessen äußere Ausgestaltung den Kundenwünschen angepasst ist, wobei ein kundenspezifisches Gehäuse sowie ein kundenspezifischer Gegenstecker bruchstückweise dargestellt sind.

Gemäß Figur 1 a weist der Sensor entlang seiner Längsachse 17 gesehen ein im Wesentlichen rotationssymmetrisches Gehäuse 6 mit einem geschlossenen Ende 14 und einem gegenüberliegenden offenen Ende 15 auf, wobei sich im geschlossenen Ende 14 der eigentliche Messwiderstand 7 befindet. Das offene Ende 15 des Gehäuses 6 wird durch ein erweitertes Teil 16 eines Steckersystems 1 abgeschlossen, wobei das erweiterte Teil 16 des Systems 1 durch eine seitliche Bördelung 2 auf der abgekehrten Seite des Gehäuses 6 gehalten wird und gleichzeitig mittels einer inneren Abdichtung 3 gegen einen umlaufenden inneren Flansch 13 des Gehäuses 6 zwecks Dichtung angepresst wird.

Das Steckersystem 1 ist in der Regel kundenspezifisch ausgebildet, wobei Enden von Kontaktstiften 10 des Steckersystems in das Innere von Gehäuse 6 ragen und mit elektrischen Leitern 12 des Messwiderstandes 7 an Verbindungspunkten 4 elektrisch und mechanisch fest verbunden sind. Es ist jedoch auch möglich, anstelle der Enden der Kontaktstifte 10 zusätzliche Stecker-Anschlussleiter einzusetzen, die mit den Kontaktstiften direkt verbunden sind.

Zwischen den Verbindungsstellen 4 und Messwiderstand 7 ist ein mit dem Steckersystem 1 verbundenes Distanzelement 9 angeordnet, welches sich gegenüber liegende Ausnehmungen 11 aufweist, wie sie anhand der Figur 1b erkennbar sind. Steckersystem 1 und Distanzelement 9 bestehen im Wesentlichen aus Kunststoff, während der der Messung zugewandte Teil von Gehäuse 6 aus Metall besteht.

Der in Figur 1b gezeigte Querschnitt zeigt das Distanzelement 9 mit den nutenförmigen Ausnehmungen 11, in denen die elektrischen Leiter 12 zum Messwiderstand angeordnet sind. Weiterhin ist die den Messwiderstand umgebende Wärmeleitpaste 8 erkennbar. Mit Hilfe von Distanzelement 9 ist es gemäß Figur 1a möglich, eine stabile Positionierung des Messwiderstandes 7 im verjüngten Bereich des geschlossenen Endes 14 von Gehäuse 6 zu gewährleisten, wobei sich zwischen Messwiderstand 7 und dem geschlossenen Ende 14 des Gehäuses 6 die Wärmeleitpaste 8 befindet, die für eine rasche Ansprechgeschwindigkeit des Sensors sorgt.

In einer für die Praxis besonders wichtigen Ausgestaltung sind Messwiderstand und Distanzelement so aufeinander abgestimmt, dass ein Längenausgleich auch bei unterschiedlich großen Messwiderständen möglich ist.

Gemäß Figur 2 wird zur Durchführung von Messungen der Sensor mit seinem geschlossenen Ende 14 entlang seiner Längsachse 17 in eine hier schematisch dargestellte Mess-Öffnung eines kundenspezifischen Gehäuses, dessen Gehäusewand 19 teilweise gebrochen gezeigt ist, so eingeschraubt, dass das geschlossene Ende 14 mit dem Temperatur-Sensor in das Gehäuse-Innere ragt. Das Gehäuse 6 ist mit seinem metallischen Teil mittels eines äußeren Gewindes in die Mess-Öffnung eingeschraubt, wobei die Öffnung in Gehäusewand 19 von einer Auflagefläche für einen umlaufenden Dichtring bzw. eine äußere Dichtung 5 umgeben ist. Die Dichtwirkung wird durch einen umlaufenden Flansch 20 des Gehäuses 6 erzeugt, wobei der Dichtring zwischen Gehäuse 19 und Flansch 20 entlang der Längsachse 17 beim Einschrauben von Gehäuse 6 gepresst wird. Die Presskraft wird dabei durch Drehung - ggf. unter Anwendung eines Drehmoment-Schlüssels - erzeugt. Ein bruchstückhaft dargestellter kundenspezifischer Gegenstecker 18 befindet sich am äußeren Ende der Anordnung.

Bei einem eventuellen Defekt bzw. bei einer Überprüfung ist es somit auf einfache Weise möglich, den kompletten Sensor mit Gehäuse und Steckersystem von der Messstelle sowie der Messleitung zu lösen und einer Prüfung zu unterziehen bzw. den kompletten Sensor auch auszuwechseln.

## Patentansprüche

1. Sensor, insbesondere Temperatur-Sensor, mit wenigstens einem Sensor-Element (7) und einem das Sensor-Element (7) umgebenden Gehäuse (6), das in einem dem Sensor-Element (7) abgekehrten Bereich mit elektrischen Anschluss-Leitern (12) des Sensor-Elements (7) verbundene Stromdurchführungen zu äußeren Anschluss-Leitern aufweist, wobei das Sensor-Element (7) in einem der Messung zugekehrten Bereich (14) des Gehäuses (6) angeordnet ist, und zwischen dem Sensor-Element (7) und den Stromdurchführungen wenigstens ein Distanzelement (9) aus elektrisch isolierendem Werkstoff mit Ausnehmungen (11) zur Führung der Anschluss-Leiter (12) zwischen dem Sensor-Element (7) den Stromdurchführungen vorgesehen ist, **dadurch gekennzeichnet, dass** die Anschluss-Leiter (12) aus dem der Messung abgekehrten Ende des Distanzelements (9) mit ihren freien enden herausragen, wobei sie sich bis zu als Stromdurchführungen vorgesehenen Kontaktstiften (10) erstrecken und mit diesen elektrisch und mechanisch fest verbunden sind.

2. Sensor nach Anspruch 1, **dadurch gekennzeichnet, dass** die Kontaktstifte (10) hermetisch dicht durch das Gehäuse (6) nach außen geführt sind.

3. Sensor nach Anspruch 1 oder 2, **dadurch gekennzeichnet, dass** das Distanzelement (9) von der Stromdurchführung der Anschlussleiter aus gesehen sich in Richtung Sensor querschnittsmäßig verjüngt und die Ausnehmungen (11) in sich gegenüber liegenden seitlichen Flächen des Distanzelements (9) angeordnet sind und die vom Sensor (7) ausgehenden elektrischen Leiter (12) aufnehmen, die sich bis zu den Kontaktstiften (10) erstrecken und mit diesen elektrisch und mechanisch fest verbunden sind.

4. Sensor nach einem der Ansprüche 1 bis 3, **dadurch gekennzeichnet, dass** das Distanzelement (9) wenigstens zum Teil prismatisch ausgebildet ist, wobei die Ausnehmungen (11) als Nuten in Seitenflächen ausgebildet sind, deren Ebenen sich außerhalb des Gehäuses (6) schneiden.

5. Sensor nach einem der Ansprüche 1 bis 4, **dadurch gekennzeichnet, dass** das Gehäuse (6) wenigstens teilweise rotationssymmetrisch ausgebildet ist.

6. Sensor nach einem der Ansprüche 1 bis 5, **dadurch gekennzeichnet, dass** das Gehäuse (6) ein der Messung zugewandtes Teil aus Metall und ein der Messung abgewandtes Teil als Steckersystem (1), das im Wesentlichen aus elektrisch isolierendem Werkstoff besteht, aufweist.

7. Sensor nach Anspruch 6, **dadurch gekennzeichnet, dass** das Steckersystem (1) mit dem Distanzelement (9) verbunden ist.

8. Sensor nach Anspruch 6 oder 7, **dadurch gekennzeichnet, dass** als elektrisch isolierender Werkstoff Kunststoff eingesetzt ist.

9. Sensor nach einem der Ansprüche 1 bis 8, **dadurch gekennzeichnet, dass** er als Sensor-Element (7) ein temperaturabhängiger Messwiderstand aus einem Substrat mit elektrisch isolierender Oberfläche und darauf befindlicher Widerstandsschicht eingesetzt ist.

10. Verwendung eines Sensors nach einem der Ansprüche 1 bis 9 als Temperatur-Sensor.
